# EUROPEAN PATENT SPECIFICATION

(11) **EP 2 086 172 B1**
(45) Date of publication and mention of the grant of the patent: **15.06.2011**
(21) Application number: 08700065.9
(22) Date of filing: 07.01.2008
(51) Int. Cl.: H04L 12/24, H04L 29/06

(54) **Method, system and device for realizing the intelligent service**
Verfahren, System und Vorrichtung zur Umsetzung des intelligenten Dienstes
Procédé, système et dispositif de prestation de services intelligents

(30) Priority: 07.03.2007 CN 200710080088
(43) Date of publication of application: 05.08.2009
(73) Proprietor: Huawei Technologies Co., Ltd., Longgang District, Shenzhen Guangdong 518129 (CN)
(72) Inventor: DUN, Taiyong, Shenzhen Guangdong 518129 (CN); CAI, Yongfeng, Shenzhen Guangdong 518129 (CN); LIU, Yaodong, Shenzhen Guangdong 518129 (CN)
(74) Representative: Körber, Martin Hans
(86) International application number: PCT/CN2008/070039
(87) International publication number: WO 2008/106872

(56) References cited:
- WO-A1-93/17516
- WO-A1-95/14360
- WO-A1-99/43138
- WO-A1-03/032618
- CN-A- 1 438 787
- CN-A- 101 039 196
- CN-C- 1 175 634

## Description

### FIELD OF THE INVENTION

The present invention relates to data transmission techniques in the field of communications, and in particular, to a method, system, and apparatus for implementing an intelligent network service.

### BACKGROUND

As telephones become popular and intelligent network services continue to develop, more and more user terminals have been using intelligent network services. The intelligent network services being widely used may include Pre-Paid Service (PPS), Virtual Private Networks (VPN) service, etc. Generally, a terminal is bound with an intelligent network service, i.e., a user has to use a terminal that has been provided with an intelligent network service to obtain the service provided by the corresponding intelligent network service. In this case, the user will lose the service provided by the intelligent network service when he/she is not able to use the terminal that has been provided with the intelligent network service.

To address the above problem, the prior art provides a method for payment using another fixed phone, such as a user specified third party fixed phone terminal. The method includes the following steps. A user uses a fixed phone to send an intelligent network service access code to a public switched telephone network (PSTN) office and informs the PSTN office of the identification of a third party fixed phone terminal used for pa yment, the password, and the called number information. The PSTN office connects a call to a called terminal, and records the start time and end time of a talk. Finally, the communication fee is paid by the account of the third party fixed phone terminal used for payment. Here, the identification of the third party terminal may be the user name or the number of the third party fixed phone terminal.

In this method, the calling terminal and the terminal used for payment must be network terminals of the same type, e.g., fixed phone terminals, and terminals from different networks cannot be supported. Furthermore, the above method can only implement a function of payment for a call by a third party terminal account, and cannot implement the intelligent network service with which the third party terminal account has been provided. For example, if the third party terminal has been provided with an intra-group short number dialing service or a familiarity number service, then a current call initiated from the calling terminal cannot implement the above mentioned services.
Document D1 (WO 99/43138 A1) discloses a method of allocating one of plural communication terminals from common pool of device to a user in the virtual private network through which the user's personal user profile is allocated to this device in a database provided.
Document D2 (WO 03/032618) provide communication between a data communication network and a cellular network, enabling a cellular network customer to use his customer ID to access services in the data communication network).

### SUMMARY

The invention is defined by appended claims.

Embodiments of the invention provide a method, a system, and an apparatus for implementing an intelligent network service, so as to address the existing issues in the prior art, for example, the calling terminal and the third party terminal used for payment must be terminals within networks of the same type, access from different networks can not be supported, and the intelligent network service with which the third party terminal has been provided cannot be implemented during the call.

In various embodiments of the invention, a calling terminal sends a call request including information about a third party terminal and an identification of a called terminal to a service control entity. The service control entity performs authentication of the third party terminal according to the information about the third party terminal, and implements an intelligent network service according to the identification of the called terminal if the authentication is passed and the service control entity determines that a current call is the intelligent network service with which the third party terminal has been provided. In this manner, a user may employ a terminal from a different type of network to obtain the account and the intelligent network service features of a third party terminal when the user cannot use the third party terminal that has been provided with the intelligent network service, so as to facilitate the use for the user and to achieve good user experience.

### BRIEF DESCRIPTION OF THE DRAWINGS

Fig. 1 is a schematic diagram showing the system structure according to an embodiment of the invention;

Fig. 2 is a networking diagram showing the main entities involved according to the first embodiment of the invention;

Fig. 3 is a networking diagram showing the main entities involved according to the first embodiment of the invention;

Fig. 4 is a flowchart showing the method according to the second embodiment of the invention;

Fig. 5 is a flowchart showing the method according to the third embodiment of the invention; and

Fig. 6 is a schematic diagram showing the service control entity according to an embodiment of the invention.

### DETAILED DESCRIPTION

A calling terminal sends a call request including information about a third party terminal and an identification of the called terminal to a service control entity. The service control entity performs authentication of the third party terminal according to the information about the third party terminal. If the authentication is passed and the service control entity determines that the current call is the intelligent network service with which the third party terminal has been provided, the service control entity implements the intelligent network service according to the identification of the called terminal. In an embodiment of the invention, a calling terminal, a third party terminal, and a called terminal may be a PSTN network terminal, a code division multiple access (CDMA) network terminal, a Global System for Mobile communications (GSM) network terminal, etc., respectively. The service control entity may be an entity such as a service control point (SCP). The intelligent network service may be an intra-group short number dialing service, a familiarity number service, a pre-paid service, etc. The information about the third party terminal may include the identification and the password of the terminal, etc. The identification may be the user name, the number, etc., of the terminal.

The calling terminal may send the information about the third party terminal and the identification of the called terminal to the service control entity via a service switching entity or an information receiving entity. Practically, in embodiments of the invention, the service switching entity may be a Mobile Switching Center (MSC), a Service Switching Point (SSP), etc. The information receiving entity may be an Intelligent Peripheral (IP), an MSC, etc.

Now the method of the present invention will be described in detail in conjunction with the appended drawings.

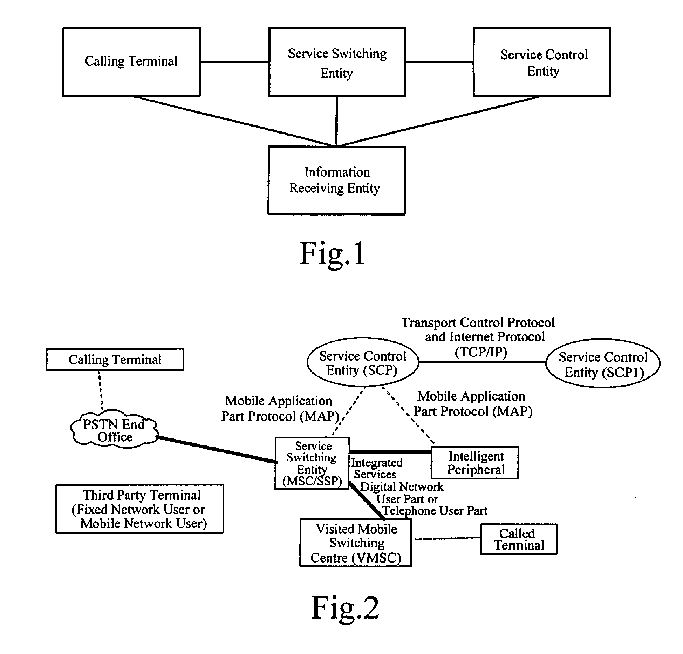

Shown in Fig. 1 is a schematic diagram of the system structure according to an embodiment of the invention. The system includes a calling terminal and a service control entity. Here, the calling terminal is configured to send a call request to the service control entity. The call request includes information about a third party terminal and an identification of the called terminal. The service control entity is configured to perform authentication of the third party terminal according to the received information about the third party terminal, and to implement an intelligent network service according to the identification of the called terminal if the authentication is passed and the service control entity determines that the current call service is the intelligent network service with which the third party terminal has been provided.

The system further includes a service switching entity or an information receiving entity. The service switching entity is configured to send the information about the third party terminal and the identification of the called terminal to the service control entity. The information receiving entity is configured to send the information about the third party terminal and the identification of the called terminal to the service control entity.

In an embodiment of the invention, a calling terminal may send the information about the third party terminal and the identification of the called terminal to the service control entity via a service switching entity. Alternatively, the calling terminal may trigger a service control entity to control a service switching entity to establish a connection with an information receiving entity, and then send the information about the third party terminal and the identification of the called terminal to the information receiving entity, which then sends the received information about the third party terminal and identification of the called terminal to the service control entity.

The service control entity is configured to determine a home service control entity of the third party terminal according to the information about the third party terminal. The authentication is passed if the user data information of the third party terminal saved by the home service control entity of the third party terminal meets a set condition. In particular, if the information about the third party terminal includes an identification and a password of the third party terminal, the service control entity is configured to find the home service control entity of the third party terminal according to the corresponding relationship between the identification of the third party terminal and the home service control entity of the third party terminal, to obtain the password of the third party terminal from the home service control entity of the third party terminal, and to determine whether the password obtained from the home service control entity of the third party terminal is the same as the password in the information about the third party terminal. If they are the same, the authentication is passed. Otherwise, the authentication is not passed. In an embodiment of the invention, the determination condition may also be the validity of the account, or the like.

The service control entity may be further configured to determine the intelligent network service with which the third party terminal has been provided according to the information about the third party terminal. If the intelligent network service with which the third party terminal has been provided includes the current call, the service control entity determines that the current call is the intelligent network service with which the third party terminal has been provided.

The service control entity is configured to determine the home service control entity of the third party terminal according to the information about the third party terminal, and to determine, according to information saved by the home service control entity of the third party terminal about the intelligent network service with which the third party terminal has been provided, that the third party terminal has been provided with the intelligent network service corresponding to the information about the intelligent network service. In particular, the service control entity is configured to find the home service control entity of the third party terminal according to the corresponding relationship between the information about the third party terminal and the home service control entity of the third party terminal, to send a Transport Control Protocol and Internet Protocol or an Execute signaling to the home service control entity of the third party terminal, to receive the information about the intelligent network service with which the third party terminal has been provided sent from the home service control entity of the third party terminal, and to determine that the third party terminal has been provided with the intelligent network service corresponding to the information about the intelligent network service.

Now the method of the present invention will be described in detail in conjunction with specific embodiments.

In the first embodiment of the invention, a PSTN terminal acts as a calling terminal and a terminal in a GSM network acts as a third party terminal. Shown in Fig. 2 is a networking diagram of the main entities involved in the first embodiment of the invention. Here, the service control entity is set as the SCP, and the service switching entity is set as the MSC/SSP. The identification of the called terminal may be the connection identification of a called terminal, i.e., the phone number.

In the first embodiment, the calling terminal initiates a call request to an MSC/SSP via a PSTN office. The call request includes a remote access identification of the intelligent network service, information about a third party terminal, and an identification of the called terminal. The remote access identification of the intelligent network service indicates that the communication fee is assumed by the third party terminal, and further indicates that the current call requests the intelligent network service with which the third party terminal has been provided. The information about the third party terminal may include the identification and the password of the terminal, etc. The identification may be the user name or the number of the third party terminal. The identification of the called terminal may be information such as the phone number of the called terminal, etc. The call request may be transmitted via the Integrated Services Digital Network (ISDN) User Part (ISUP) or Telephone User Part (TUP).

After an MSC/SSP receives a call request, the call request is forwarded to the SCP. Upon receiving the call request, the SCP performs authentication of the third party account according to the information about the third party terminal in the request. In this embodiment, the method used by the SCP to perform authentication according to third party terminal information may be as follows. The SCP determines the home SCP of the third party terminal according to the identification of the third party terminal, and the authentication is passed if the user data information of the third party terminal saved by the home SCP of the third party terminal meets a set condition. In particular, the SCP first finds the home SCP of the third party terminal according to the identity of the third party terminal. If the home SCP of the third party terminal is the same as the SCP which receives the call request, the SCP performs authentication according to the user data information of the third party terminal saved in itself. Otherwise, for example, if the home SCP is SCP1, the SCP may send a Transport Control Protocol and Internet Protocol (TCP/IP) or an Execute signaling to the SCP1, and the SCP1 then sends the user data information of the third party terminal to the SCP. Here, the user data information of the third party may include the password of the third party terminal. Then, the SCP performs authentication of the third party terminal according to the user data information, i.e., determines whether the password included within the call request is the same as that from the SCP1. If they are the same, the authentication is passed. Otherwise, the authentication is not passed. Practically, the user data information of the third party terminal may further include the account state of the third party terminal, and the authentication condition may be the validity of the account state or the like.

After the authentication is passed, the SCP obtains the information about the intelligent network service with which the third party terminal has been provided from the SCP1 according to the TCP/IP protocol. In other words, the SCP1 sends to the SCP the information about the intelligent network service with which the third party terminal has been provided, and the SCP determines whether the current call is the intelligent network service with which the third party terminal has been provided after the SCP determines that the third party terminal has been provided with the intelligent network service corresponding to the information about the intelligent network service. If the current call is the intelligent network service with which the third party terminal has been provided, the intelligent network service is implemented. Specifically, if the SCP determines that the third party terminal has been provided with a familiarity number service, and determines that the current call is the familiarity number service according to the connection identification of the called terminal for the current call, the SCP records the call charging rate for the familiarity number service and sends the connection identification of a called terminal to the MSC/SSP. The MSC/SSP routes the call to a visited mobile switching center (VMSC) that serves the called terminal according to the connection identification of the called terminal, and the VMSC connects the call to the called terminal so as to perform communication between the calling terminal and the called terminal. When the call ends, the MSC may send the obtained call start time and end time to the SCP, and the SCP may create a call bill according to the recorded call charging rate for the familiarity number service. Alternatively, the call bill may be created by the MSC according to the obtained call start time and end time.

In addition, if the information receiving entity is set as an intelligent peripheral, the method for a calling terminal to send information about a third party terminal and a connection identification of a called terminal to an SCP in an embodiment of the invention may further include the following. A calling terminal sends a call request including a remote access identification of an intelligent network service to an MSC/SSP via a PSTN office. The MSC/SSP identifies the call as an intelligent network service remote access call and sends it to the SCP as a triggering signal. The SCP establishes a connection between the MSC/SSP and the intelligent peripheral. The calling terminal sends the information about the third party terminal to the intelligent peripheral according to a voice instruction from the intelligent peripheral. The intelligent peripheral forwards the information about the third party terminal to the SCP. After the SCP passed the authentication of the information about the third party terminal, the intelligent peripheral plays a voice prompt to the calling terminal, requesting the calling terminal to send the connection identification of the called terminal. The intelligent peripheral sends the connection identification of the called terminal to the SCP. The SCP disconnects the connection between the MSC/SSP and the intelligent peripheral, and performs subsequent call processing according to the obtained third party terminal information and the connection identification of the called terminal. In this embodiment, the SCP may communicate with the MSC/SSP and the intelligent peripheral via the Mobile Application Part (MAP) protocol, and the MSC/SSP may communicate with the intelligent peripheral via an ISUP/TUP message.

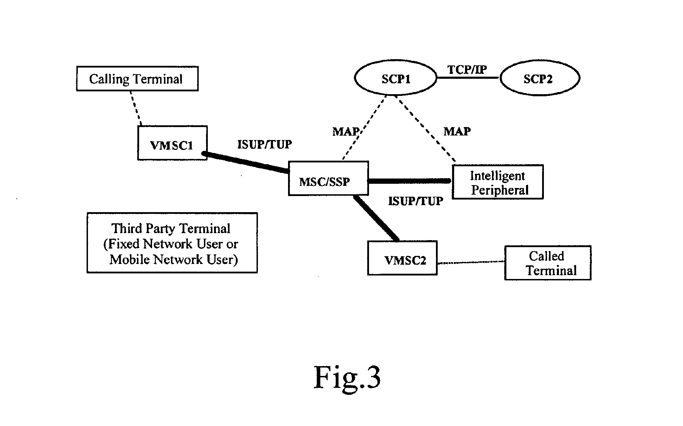

In the first embodiment, the steps of the method are similar if the third party terminal is a PSTN terminal or a CDMA terminal. The steps of the method are also similar if the calling terminal is a network terminal of GSM, CDMA, and the like. What is different is that the call request initiated by the calling terminal is not sent to the service switching entity via a PSTN office, but is forwarded via a VMSC that serves the calling terminal. The networking diagram is shown in Fig. 3.

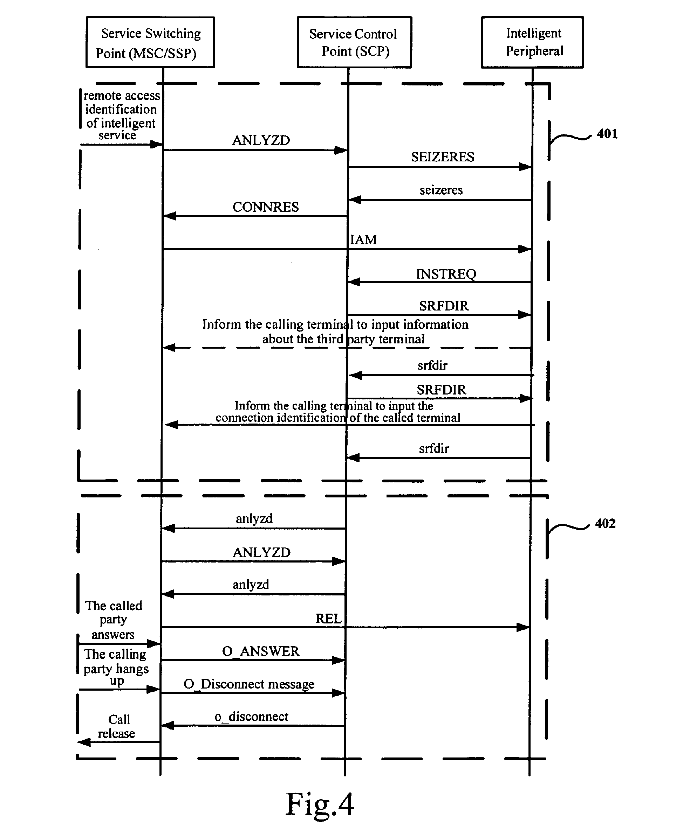

In the second embodiment, a PSTN network terminal triggers a VPN intelligent network service in CDMA via a remote access identification of an intelligent network service, employs a third party terminal which has been provided with the VPN intelligent network service in the CDMA network as a payment account, and uses an intra-group short number for dialing a called terminal. The connection identification of the called terminal is a short number. The information receiving entity is an intelligent peripheral. The flowchart for the method of this embodiment is shown in Fig. 4. The method mainly includes the following steps.

In step 401, an SCP receives a call request sent from a calling terminal, the call request including information about a third party terminal and an identification of a called terminal, and performs authentication of the third party terminal according to the information about the third party terminal.

The calling terminal first sends a call request to a PSTN office, the call request including a remote access identification of an intelligent network service. Upon receiving the call request, the PSTN office forwards the call request to an MSC/SSP. The MSC/SSP identifies the call as a remote access call of an intelligent network service, and sends the remote access identification of the intelligent network service to an SCP as a triggering signal via an Analyzed Information Invoke (ANLYZD) message. Alternatively, the remote access identification of the intelligent network service may be sent to the SCP via an Origination Request (ORREQ) message. After the SCP is triggered, the SCP establishes a connection with an intelligent peripheral via a seizing resource (SEIZERES) message. The SCP receives a seizing resource response message (seizeres) returned from the intelligent peripheral, and sends a connect resource (CONNRES) message to an MSC/SSP indicating the MSC/SSP to establish a connection with the intelligent peripheral. The MSC/SSP sends an Initial Address Message (IAM) to the intelligent peripheral to establish a connection with the intelligent peripheral. Immediately, the intelligent peripheral sends an instruction request (INSTREQ) message to the SCP requesting an indication of playing a voice prompt. The SCP sends a voice Specialized Resource Function (SRF) Directive INVOKE (SRFDIR) message to the intelligent peripheral after receiving the INSTREQ message, indicating the intelligent peripheral to play a voice message to the calling terminal requesting the calling terminal to input the information about the third party terminal. The calling terminal immediately sends the information about the third party terminal to the intelligent peripheral. Here, the information may include the identification and the password of the third party terminal. The intelligent peripheral sends the received information about the third party terminal to the SCP via a voice prompt play directive response message (srfdir). The SCP performs authentication of the account according to the information about the third party terminal. The authentication process may be the same as that of the first embodiment. When the authentication succeeds, the SCP sends an SRFDIR message to the intelligent peripheral and controls the intelligent peripheral to play a voice message to the calling terminal requesting the calling terminal to input the connection identification of the called terminal. The calling terminal immediately sends the connection identification information of the called terminal to the intelligent peripheral. The intelligent peripheral then sends the connection identification of the called terminal to the SCP via srfdir. In an embodiment of the invention, both an MSC and an intelligent peripheral may perform the process of prompting and collecting user information. Practically, the way in which the SCP obtains the information about the third party terminal and the identification of the called terminal is not limited to play of a prompt and maybe in other forms.

In step 401, after obtaining the information about the third party terminal, the SCP first performs authentication according to the information about the third party terminal. When the authentication is passed, the SCP obtains the connection identification of the called terminal. Alternatively, the SCP may obtain the information about the third party terminal and the connection identification of the called terminal before performing authentication of the information about the third party terminal.

In addition, the authentication method and authentication condition in step 401 are not the only options. If a higher security assurance is desired, the following authentication steps may be employed. The SCP may perform authentication of the connection identification after obtaining the connection identification of the called terminal. In this embodiment, the connection identification of the called terminal may be set as an intra-group short number. Therefore, the SCP obtains a long number corresponding to the short number of the called terminal according to the information about third party terminal. The SCP determines the home SCP of the called terminal according to the short number of the called terminal and the corresponding long number, and obtains the called terminal user information from the home SCP of the called terminal. When the states of the short number and the long number of the called terminal are valid, it is determined that the authentication of the connection identification of the called terminal is passed. Alternatively, other authentication conditions may be employed.

In step 402, when the authentication is passed, if the SCP determines that the current call service is the intelligent network service with which the third party terminal has been provided, the intelligent network service may be implemented according to the identification of the called terminal.

After the authentication of the information about the third party terminal is passed, the SCP determines the home SCP of the third party terminal according to the information about the third party terminal. According to the information saved by the home SCP of the third party terminal about the intelligent network service with which the third party terminal has been provided, the SCP determines that the third party terminal has been provided with the intelligent network service corresponding to the information about the intelligent network service. In particular, the SCP may find the home SCP of the third party terminal according to the obtained information about the third party terminal. In this embodiment, it is assumed that the home SCP of the third party terminal is SCP1. Then, the SCP may obtain the information about the intelligent network service with which the third party terminal has been provided from the SCP1 according to the TCP/IP protocol, and determine that the third party terminal has been provided with the intelligent network service corresponding to the information about the intelligent network service. For example, the third party terminal may have been provided with the intelligent network service such as intra-group short number dialing and the pre-paid service. The SCP analyzes the current call according to the connection identification of the called terminal. Because the connection identification of the called terminal is a short number, it is analyzed that the current call is an intra-group call. Therefore, it is determined that the third party terminal has the right to call the called terminal and the current call is the intelligent network service with which the third party terminal has been provided. Thus, the intelligent network service of intra-group short number dialing and the pre-paid service may be performed.

The SCP obtains the intelligent network service information about intra-group short number dialing with which the third party terminal has been provided, and determines the communication charging fee. The connection number of the called terminal is sent to the MSC/SSP via a terminal list (TERMLIST) message within an analyzed response message (anlyzd), and a subsequent trigger list (TRIGADDRLIST) (Calling_Routing_Address_Available, O_Answer, O_Disconnect) is configured. The MSC/SSP then sends ANLYZD to the SCP as a triggering signal according to a calling routing address available message (Calling_Routing_Address_Available). Upon receiving the triggering signal, the SCP determines the type of this call as an intra-group short number call and the corresponding charging rate for this intra-group call according to the above-mentioned analysis of the connection identification of the called terminal. Meanwhile, the SCP controls the MSC/SSP to disconnect the connection with the intelligent peripheral. Specifically, the SCP sends anlyzd to the MSC/SSP, and the MSC/SSP sends a release (REL) message to the intelligent peripheral to disconnect the connection between them.

The MSC/SSP routes the call to the called terminal according to the connection identification of the called terminal. When the called terminal answers, the MSC/SSP sends an answering (O_ANSWER) message to the SCP. Upon receiving the answering message, the SCP considers that the call starts, monitors the connection state of the link for this call, records the call start time, and performs billing during the call, in which the billing rate is the corresponding charging rate for the intra-group call service with which the third party terminal has been provided. During the call, when the SCP determines that the calling fee has become insufficient, the SCP sends a call release request, and the MSC/SSP disconnects the connection between the calling terminal and the called terminal.

If no calling fee insufficiency situation occurs, when either terminal hangs up, the MSC/SSP sends an O_Disconnect message to the SCP, indicating the end of the call. The SCP records the call end time, creates a call bill for this call according to the obtained call start time above, and deducts the fee for this call. Alternatively, a threshold time may be set, and at the end of a threshold time, the calling fee during the threshold time is deducted. Lastly, the SCP returns an o_disconnect response message to the MSC/SSP. The MSC/SSP disconnects the connection with the calling terminal, and the call ends.

In the second embodiment, if the calling terminal is a CDMA terminal or a GSM terminal, the steps of the flow will be similar.

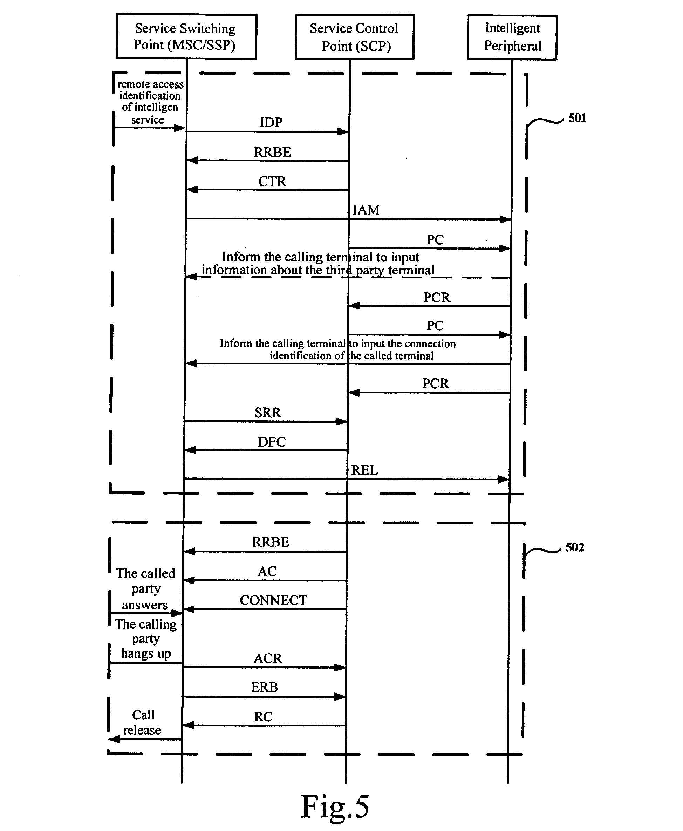

In the third embodiment of the invention, a CDMA network terminal triggers a PPS intelligent network service in a GSM network via a remote access identification of an intelligent network service, and employs as a payment account a third party terminal which has been provided with the PPS and the familiarity number intelligent network service in the GSM network. In this embodiment, the connection number of the called terminal is a familiarity number set by the third party terminal. The flowchart of the method in this embodiment is shown in Fig. 5. The method mainly includes the following steps.

In step 501, the calling terminal sends a call request to the SCP, the call request including information about a third party terminal and a connection identification of a called terminal. The SCP performs authentication of the third party terminal according to the information about the third party terminal.

Similar to the second embodiment, the information about the third party terminal and the connection identification of the called terminal may be sent to the SCP with different methods. In this embodiment, the implementation may also employ an intelligent peripheral.

The calling terminal first sends a call request to the MSC/SSP. The call request includes a remote access identification of an intelligent network service. Upon identifying this call as a remote call of the intelligent network service, the MSC/SSP sends the remote access identification of the intelligent network service to the SCP as a triggering signal via an Initial Detection Point (IDP) message. Upon receiving the IDP message, the SCP sends a Request Report BCSM (Basic Call State Mode) Event (RRBE) message to the MSC/SSP to monitor the connection condition of the link in real time. Then, the SCP delivers a Connect To Resource (CTR) message to the MSC/SSP to control the MSC/SSP to establish an association with the intelligent peripheral. The MSC/SSP establishes a connection with the intelligent peripheral. The SCP then sends a PromptAndCollectUserInformation (PC) message to the intelligent peripheral, indicating the intelligent peripheral to play a voice prompt to the calling terminal requesting the calling terminal to input information about the third party terminal. The calling terminal immediately sends the identification and the password of the third party terminal to the intelligent peripheral. The intelligent peripheral sends the received information about the third party terminal via a PromptAndCollectUserInformationAck response message (PCR) to the SCP. The SCP performs authentication of the account according to the information about the third party terminal. Again, the authentication process in this embodiment may be the same as that in the first embodiment. When the authentication succeeds, the SCP sends a PC message to the intelligent peripheral, indicating the intelligent peripheral to play a voice prompt to the calling terminal requesting the calling terminal to input the connection identification of the called terminal. The calling terminal immediately sends the connection identification information of the called terminal to the intelligent peripheral. The intelligent peripheral then sends the connection identification of the called terminal to the SCP via a PCR message. The MSC/SSP returns a specialized resource report (SRR) message to the SCP, informing the SCP of the end of the prompt play. Accordingly, the SCP sends a disconnect forward connection (DFC) message to the MSC/SSP, indicating the MSC/SSP to disconnect the connection with the intelligent peripheral. The MSC/SSP sends a REL message to the intelligent peripheral to disconnect the connection between them.

If a higher security level is desired, the authentication of the called terminal may be performed. After obtaining the connection identification of the called terminal, the SCP performs authentication of the connection identification. The authentication conditions set in this embodiment may be such that the authentication is passed if the state of the connection identification of the called terminal is valid. Alternatively, other authentication methods may be used.

In step 502, when the authentication is passed, the SCP obtains the information about the intelligent network service with which the third party terminal has been provided. If it is determined that the current call service is the intelligent network service with which the third party terminal has been provided, the intelligent network service is executed and the call is connected to the called terminal according to the connection identification of the called terminal.

When the authentication is passed, the SCP may look up the home SCP of the third party terminal according to the obtained information about the third party terminal, determine that the intelligent network service with which the third party terminal has been provided is a pre-paid service and a familiarity number intelligent network service, and determine whether the identification is a familiarity number which the third party account has registered according to the identification of the called terminal. If the identification is a familiarity number which the third party account has registered, the SCP determines that the current call service is the familiarity number intelligent network service with which the third party terminal has been provided, executes the pre-paid service and the familiarity number intelligent network service, and records the corresponding charging rate for the familiarity number intelligent network service.

The SCP sends a RRBE message and an Apply Charging (AC) message to the MSC/SSP to monitor the connection condition of the link in real time and to indicate the MSC/SSP to submit a charging report. Then, the SCP sends a CONNECT message to the MSC/SSP, the message including the connection identification of the called terminal. The MSC/SSP establishes a connection between the calling terminal and the called terminal. When the called terminal answers, the SCP performs real time charging according to the saved corresponding charging rate for the familiarity number intelligent network service. If the fee becomes insufficient during the call, the SCP sends a Call Release message to the MSC/SSP, indicating the MSC/SSP to disconnect the connection between the calling terminal and the called terminal. If no calling fee insufficiency situation occurs, when either terminal hangs up, for example, the calling terminal hangs up, the MSC/SSP submits an Apply Charging Report (ACR) message and a release monitoring (ERB) message to the SCP. The ACR message includes the call start time and end time. The SCP creates a call bill according to the time information in the ACR message and the saved familiarity number charging rate, deducts a fee for this call, and sends a Release Call (RC) message to the MSC/SSP to inform the MSC/SSP to stop monitoring the link. The MSC/SSP disconnects the connection with the calling terminal and the call ends.

For the third embodiment, if the calling terminal is a PSTN network terminal or a GSM network terminal, the processing procedure is similar and thus is not detailed herein.

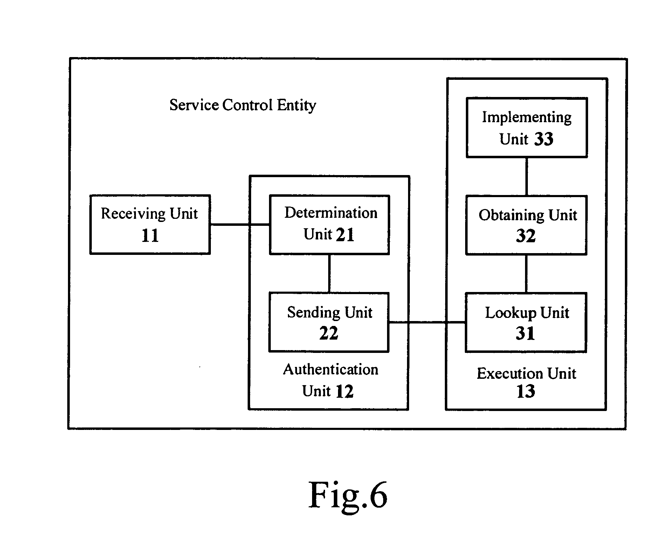

Based on the above description to the system and the method according to the embodiments of the invention, an embodiment of the invention further provides a service control entity, as shown in Fig. 6. The service control entity includes a receiving unit 11, an authentication unit 12, and an execution unit 13. Here, the receiving unit 11 is configured to receive a call request sent from a calling terminal. The call request includes information about a third party terminal and an identification of the called terminal. The authentication unit 12 is configured to perform authentication of the third party terminal according to the information about the third party terminal, and to trigger the execution unit 13 if the authentication is passed. The execution unit 13 is configured to implement the intelligent network service according to the identification of the called terminal if it is determined that the current call service is the intelligent network service with which the third party terminal has been provided.

The authentication unit 12 includes a determination unit 21 and a sending unit 22. Here, the determination unit 21 is configured to determine the home service control entity of the third party terminal according to the information about the third party terminal. If the user data information of the third party terminal saved by the home service control entity of the third party terminal meets a set condition, the determination unit 21 sends the authentication passed information to the sending unit 22. The sending unit 22 is configured to trigger the execution unit 13 upon receiving the authentication passed information.

The execution unit 13 includes a lookup unit 31, an obtaining unit 32 and an implementing unit 33. Here, the lookup unit 31 is configured to determine the home service control entity of the third party terminal according to the information about the third party terminal. According to the information saved by the home service control entity of the third party terminal about the intelligent network service with which the third party terminal has been provided, the obtaining unit 32 is configured to determine that the third party terminal has been provided with the intelligent network service corresponding to the information of the intelligent network service. The implementing unit 33 is configured to implement the intelligent network service according to the identification of the called terminal if it is determined that the current call service is the intelligent network service with which the third party terminal has been provided. In an embodiment of the service control entity, the third party terminal identification may be the user name or the number of the third party terminal, or the like.

As described in the previous embodiments of the invention, when a user cannot use the third party terminal that has been provided with the intelligent network service, the user may employ a terminal from a different type of network to obtain the account and the intelligent network service features of a third party terminal, so as to facilitate the use for the user and to achieve good user experience.

It is apparent to the skilled in the art that various modifications and variations may be made without departing from the scope of the invention. Therefore, the invention is intended to include those modifications and variations if those modifications and variations fall in the scope of the claims and their equivalents of the invention.

## Claims

1. A method for implementing an intelligent network service, comprising:
receiving (401,501), by a service control entity, a call request sent from a calling terminal, the call request comprising a remote access identification of the intelligent network service, information about a third party terminal and an connection identification of a called terminal; wherein, the remote access identification of the intelligent network service indicates that the communication fee is assumed by the third party terminal and that the current call requests the intelligent network service with which the third party terminal has been provided;
performing (401,501), by the service control entity, authentication of the third party terminal according to the information about the third party terminal;
obtaining (402,502), by the service control entity, information about the intelligent network service with which the third party terminal has been provided;
determining (402,502), by the service control entity, that the current call service is the intelligent network service with which the third party terminal has been provided; and
executing (402,502), by the service control entity, the intelligent network service and connecting the call to the called terminal according the connection identification of the called terminal, if the authentication is passed and the service control entity determined that said current call service is the intelligent network service with which the third party terminal has been provided.

2. The method of claim 1, wherein performing, by the service control entity, authentication of the third party terminal according to the information about the third party terminal, further comprises:
determining, by the service control entity, a home service control entity of the third party terminal according to the information about the third party terminal, and passing the authentication if user data information of the third party terminal saved by the home service control entity of the third party terminal meets a set condition.

3. The method of claim 2, wherein the information about the third party terminal comprises an identification of the third party terminal and a password of the third party terminal,
and wherein the set condition is that the password of the third party terminal is the same as a password of the third party terminal saved by the home service control entity of the third party terminal.

4. The method of claim 1, wherein obtaining, by the service control entity, the intelligent network service with which the third party terminal has been provided according to the information about the third party terminal, comprises:
determining(402,502), by the service control entity, a home service control entity of the third party terminal according to the information about the third party terminal, and determining, according to information saved by the home service control entity of the third party terminal about the intelligent network service with which the third party terminal has been provided, that the third party terminal has been provided with the intelligent network service corresponding to the information about the intelligent network service.

5. A system for implementing an intelligent network service, comprising a service switching entity, a calling terminal and a service control entity, wherein
the calling terminal is configured to send a call request to the service switching entity, the call request comprising a remote access identification of an intelligent network service, information about a third party terminal and an identification of a called terminal, wherein the remote access identification of the intelligent network service indicates that the communication fee is assumed by the third party terminal, and that the current call requests the intelligent network service with which the third party terminal has been provided; and
the service control entity is configured to perform authentication of the third party terminal according to the received information about the third party terminal, obtain information about the intelligent network service with which the third party terminal has been provided, determine that the current call service is the intelligent network service with which the third party terminal has been provided, and execute the intelligent network service and connected the call to the called terminal according the connection identification of the called terminal, if the authentication is passed and the service control entity determined that said current call service is the intelligent network service with which the third party terminal has been provided.

6. The system of claim 5, further comprising a service switching entity or an information receiving entity, wherein
the service switching entity is configured to send the information about the third party terminal and the identification of the called terminal to the service control entity; and
the information receiving entity is configured to send the information about the third party terminal and the identification of the called terminal to the service control entity.

7. The system of claim 5, wherein
the service control entity is configured to determine a home service control entity of the third party terminal according to the information about the third party terminal, and to pass the authentication if user data information of the third party terminal saved by the home service control entity of the third party terminal meets a set condition.

8. The system of claim 5, wherein
the service control entity is configured to determine a home service control entity of the third party terminal according to the information about the third party terminal, and to determine, according to information saved by the home service control entity of the third party terminal about the intelligent network service with which the third party terminal has been provided, that the third party terminal has been provided with the intelligent network service corresponding to the information about the intelligent network service.

9. A service control entity comprising a receiving unit, an authentication unit, and an execution unit, wherein
the receiving unit(11) is configured to receive a call request sent from a calling terminal, the call request comprising a remote access identification of the intelligent network service, information about a third party terminal and an connection identification of a called terminal; wherein, the remote access identification of the intelligent network service indicates that the communication fee is assumed by the third party terminal and that the current call requests the intelligent network service with which the third party terminal has been provided;
the authentication unit(12) is configured to perform authentication of the third party terminal according to the information about the third party terminal, and to trigger the execution unit if the authentication is passed; and
the execution unit(13) is configured to implement an intelligent network service according to the identification of the called terminal if it is determined that a current call service is the intelligent network service with which the third party terminal has been provided;
wherein the execution unit comprises:
a lookup unit (31) configured to determine a home service control entity of the third party terminal according to the information about the third party terminal;
an obtaining unit (32) configured to determine, according to information saved by the home service control entity of the third party terminal about the intelligent network service with which the third party terminal has been provided, that the third party terminal has been provided with the intelligent network service corresponding to the information about the intelligent network service; and
an implementing unit (33) configured to implement the intelligent network service according to the identification of the called terminal if the authentication is passed and it is determined that the current call service is the intelligent network service with which the third party terminal has been provided.

10. The service control entity of claim 9, wherein the authentication unit comprises a determination unit and a sending unit, and wherein
the determination unit is configured to determine a home service control entity of the third party terminal according to the information about the third party terminal, and to send authentication passed information to the sending unit if user data information of the third party terminal saved by the home service control entity of the third party terminal meets a set condition; and
the sending unit is configured to trigger the execution unit upon receiving the authentication passed information.

## Patentansprüche

1. Verfahren zum Implementieren eines intelligenten Netzwerkdienstes, mit den folgenden Schritten:
Empfangen (401, 501) einer von einem anrufenden Endgerät gesendeten Anrufanforderung durch eine Dienststeuerentität, wobei die Anrufanforderung eine Fernzugangsidentifikation des intelligenten Netzwerkdienstes, Informationen über ein Drittteilnehmerendgerät und eine Verbindungsidentifikation eines angerufenen Endgeräts umfasst; wobei die Fernzugangsidentifikation des intelligenten Netzwerkdienstes angibt, dass die Kommunikationsgebühr von dem Drittteilnehmerendgerät angenommen wird und dass der aktuelle Anruf den intelligenten Netzwerkdienst anfordert, mit dem das Drittteilnehmerendgerät versehen wurde;
Ausführen (401, 501) von Authentifikation des Drittteilnehmerendgeräts durch die Dienststeuerentität gemäß den Informationen über das Drittteilnehmerendgerät;
Erhalten (402, 502) von Informationen über den intelligenten Netzwerkdienst, mit dem das Drittteilnehmerendgerät versehen wurde, durch die Dienststeuerentität;
Bestimmen (402, 502) durch die Dienststeuerentität, dass der aktuelle Anrufdienst der intelligente Netzwerkdienst ist, mit dem das Drittteilnehmerendgerät versehen wurde; und
Ausführen (402, 502) des intelligenten Netzwerkdienstes durch die Dienststeuerentität und Verbinden des Anrufs mit dem angerufenen Endgerät gemäß der Verbindungsidentifikation des angerufenen Endgeräts, wenn die Authentifikation bestanden wird und die Dienststeuerentität bestimmt hat, dass der aktuelle Anrufdienst der intelligente Netzwerkdienst ist, mit dem das Drittteilnehmerendgerät versehen wurde.

2. Verfahren nach Anspruch 1, wobei das Ausführen von Authentifikation des Drittteilnehmerendgeräts durch die Dienststeuerentität gemäß den Informationen über das Drittteilnehmerendgerät ferner Folgendes umfasst:
Bestimmen einer Heimat-Dienststeuerentität des Drittteilnehmerendgeräts durch die Dienststeuerentität gemäß den Informationen über das Drittteilnehmerendgerät und
Bestehenlassen der Authentifikation, wenn durch die Heimat-Dienststeuerentität des Drittteilnehmerendgeräts abgespeicherte Benutzerdateninformationen des Drittteilnehmerendgeräts eine festgesetzte Bedingung erfüllen.

3. Verfahren nach Anspruch 2, wobei die Informationen über das Drittteilnehmerendgerät eine Identifikation des Drittteilnehmerendgeräts und ein Passwort des Drittteilnehmerendgeräts umfassen,
und wobei die festgesetzte Bedingung darin besteht, dass das Passwort des Drittteilnehmerendgeräts dasselbe wie ein durch die Heimat-Dienststeuerentität des Drittteilnehmerendgeräts abgespeichertes Passwort des Drittteilnehmerendgeräts ist.

4. Verfahren nach Anspruch 1, wobei das Erhalten des intelligenten Netzwerkdienstes, mit dem das Drittteilnehmerendgerät versehen wurde, durch die Dienststeuerentität gemäß den Informationen über das Drittteilnehmerendgerät Folgendes umfasst:
Bestimmen (402, 502) einer Heimat-Dienststeuerentität des Drittteilnehmerendgeräts durch die Dienststeuerentität gemäß den Informationen über das Drittteilnehmerendgerät und Bestimmen, dass das Drittteilnehmerendgerät mit dem intelligenten Netzwerkdienst versehen wurde, der den Informationen über den intelligenten Netzwerkdienst entspricht, gemäß durch die Heimat-Dienststeuerentität des Drittteilnehmerendgeräts abgespeicherten Informationen über den intelligenten Netzwerkdienst, mit dem das Drittteilnehmerendgerät versehen wurde.

5. System zum Implementieren eines intelligenten Netzwerkdienstes, das eine Dienstvermittlungsentität, ein anrufendes Endgerät und eine Dienststeuerentität umfasst, wobei
das anrufende Endgerät dafür ausgelegt ist, eine Anrufanforderung zu der Dienstvermittlungsentität zu senden, wobei die Anrufanforderung eine Fernzugangsidentifikation eines intelligenten Netzwerkdienstes, Informationen über ein Drittteilnehmerendgerät und eine Identifikation eines angerufenen Endgeräts umfasst, wobei die Fernzugangsidentifikation des intelligenten Netzwerkdienstes angibt, dass die Kommunikationsgebühr von dem Drittteilnehmerendgerät angenommen wird und dass der aktuelle Anruf den intelligenten Netzwerkdienst anfordert, mit dem das Drittteilnehmerendgerät versehen wurde; und
die Dienststeuerentität dafür ausgelegt ist, Authentifikation des Drittteilnehmerendgeräts gemäß den empfangenen Informationen über das Drittteilnehmerendgerät auszuführen, Informationen über den intelligenten Netzwerkdienst zu erhalten, mit dem das Drittteilnehmerendgerät versehen wurde, zu bestimmen, dass der aktuelle Anrufdienst der intelligente Netzwerkdienst ist, mit dem das Drittteilnehmerendgerät versehen wurde, und den intelligenten Netzwerkdienst auszuführen und den Anruf zu dem angerufenen Endgerät gemäß der Verbindungsidentifikation des angerufenen Endgeräts zu verbinden, wenn die Authentifikation bestanden wird und die Dienststeuerentität bestimmt hat, dass der aktuelle Anrufdienst der intelligente Netzwerkdienst ist, mit dem das Drittteilnehmerendgerät versehen wurde.

6. System nach Anspruch 5, das ferner eine Dienstvermittlungsentität oder eine Informationsempfangsentität umfasst, wobei
die Dienstvermittlungsentität dafür ausgelegt ist, die Informationen über das Drittteilnehmerendgerät und die Identifikation des angerufenen Endgeräts zu der Dienststeuerentität zu senden; und
die Informationsempfangsentität dafür ausgelegt ist, die Informationen über das Drittteilnehmerendgerät und die Identifikation des angerufenen Endgeräts zu der Dienststeuerentität zu senden.

7. System nach Anspruch 5, wobei
die Dienststeuerentität dafür ausgelegt ist, gemäß den Informationen über das Drittteilnehmerendgerät eine Heimat-Dienststeuerentität des Drittteilnehmerendgeräts zu bestimmen und die Authentifikation bestehen zu lassen, wenn durch die Heimat-Dienststeuerentität des Drittteilnehmerendgeräts abgespeicherte Benutzerdateninformationen des Drittteilnehmerendgeräts eine festgesetzte Bedingung erfüllen.

8. System nach Anspruch 5, wobei
die Dienststeuerentität dafür ausgelegt ist, gemäß den Informationen über das Drittteilnehmerendgerät eine Heimat-Dienststeuerentität des Drittteilnehmerendgeräts zu bestimmen und gemäß durch die Heimat-Dienststeuerentität des Drittteilnehmerendgeräts abgespeicherten Informationen über den intelligenten Netzwerkdienst, mit dem das Drittteilnehmerendgerät versehen wurde, zu bestimmen, dass das Drittteilnehmerendgerät mit dem intelligenten Netzwerkdienst versehen wurde, der den Informationen über den intelligenten Netzwerkdienst entspricht.

9. Dienststeuerentität, die eine Empfangseinheit, eine Authentifikationseinheit und eine Ausführungseinheit umfasst, wobei
die Empfangseinheit (11) dafür ausgelegt ist, eine von einem anrufenden Endgerät gesendete Anrufanforderung zu empfangen, wobei die Anrufanforderung eine Fernzugangsidentifikation des intelligenten Netzwerkdienstes, Informationen über ein Drittteilnehmerendgerät und eine Verbindungsidentifikation eines angerufenen Endgeräts umfasst; wobei die Fernzugangsidentifikation des intelligenten Netzwerkdienstes angibt, dass die Kommunikationsgebühr von dem Drittteilnehmerendgerät angenommen wird und dass der aktuelle Anruf den intelligenten Netzwerkdienst anfordert, mit dem das Drittteilnehmerendgerät versehen wurde;
die Authentifikationseinheit (12) dafür ausgelegt ist, Authentifikation des Drittteilnehmerendgeräts gemäß den Informationen über das Drittteilnehmerendgerät auszuführen und die Ausführungseinheit zu triggern, wenn die Authentifikation bestanden wird; und
die Ausführungseinheit (13) dafür ausgelegt ist, einen intelligenten Netzwerkdienst gemäß der Identifikation des angerufenen Endgeräts zu implementieren, wenn bestimmt wird, dass ein aktueller Anrufdienst der intelligente Netzwerkdienst ist, mit dem das Drittteilnehmerendgerät versehen wurde;
wobei die Ausführungseinheit Folgendes umfasst:
eine Nachschlageeinheit (31), die dafür ausgelegt ist, eine Heimat-Dienststeuerentität des Drittteilnehmerendgeräts gemäß den Informationen über das Drittteilnehmerendgerät zu bestimmen;
eine Erhalteeinheit (32), die dafür ausgelegt ist, gemäß durch die Heimat-Dienststeuerentität des Drittteilnehmerendgeräts abgespeicherten Informationen über den intelligenten Netzwerkdienst, mit dem das Drittteilnehmerendgerät versehen wurde, zu bestimmen, dass das Drittteilnehmerendgerät mit dem intelligenten Netzwerkdienst versehen wurde, der den Informationen über den intelligenten Netzwerkdienst entspricht; und
eine Implementiereinheit (33), die dafür ausgelegt ist, den intelligenten Netzwerkdienst gemäß der Identifikation des angerufenen Endgeräts zu implementieren, wenn die Authentifikation bestanden wird und bestimmt wird, dass der aktuelle Anrufdienst der intelligente Netzwerkdienst ist, mit dem das Drittteilnehmerendgerät versehen wurde.

10. Dienststeuerentität nach Anspruch 9, wobei die Authentifikationseinheit eine Bestimmungseinheit und eine Sendeeinheit umfasst und wobei
die Bestimmungseinheit dafür ausgelegt ist, eine Heimat-Dienststeuerentität des Drittteilnehmerendgeräts gemäß den Informationen über das Drittteilnehmerendgerät zu bestimmen und Authentifikation-Bestanden-Informationen zu der Sendeeinheit zu senden, wenn durch die Heimat-Dienststeuerentität des Drittteilnehmerendgeräts abgespeicherte Benutzerdateninformationen des Drittteilnehmerendgeräts eine festgesetzte Bedingung erfüllen; und
die Sendeeinheit dafür ausgelegt ist, beim Empfang der Authentifikation-Bestanden-Informationen die Ausführungseinheit zu triggern.

## Revendications

1. Procédé de mise en oeuvre d'un service de réseau intelligent, comprenant :
la réception (401, 501), par une entité de commande de service, d'une requête d'appel envoyée par un terminal appelant, la requête d'appel comprenant une identification d'accès à distance du service de réseau intelligent, des informations sur un terminal tiers et une identification de connexion d'un terminal appelé ; l'identification d'accès à distance du service de réseau intelligent indiquant que le tarif de communication est pris en charge par le terminal tiers et que l'appel en cours demande le service de réseau intelligent qu'a reçu le terminal tiers ;
la réalisation (401, 501), par l'entité de commande de service, de l'authentification du terminal tiers en fonction des informations sur le terminal tiers ;
l'obtention (402, 502), par l'entité de commande de service, d'informations sur le service de réseau intelligent qu'a reçu le terminal tiers ;
la détermination (402, 502), par l'entité de commande de service, que le service d'appel en cours est le service de réseau intelligent qu'a reçu le terminal tiers ; et
l'exécution (402, 502), par l'entité de commande de service, du service de réseau intelligent et la connexion de l'appel au terminal appelé en fonction de l'identification de connexion du terminal appelé, si l'authentification réussit et si l'entité de commande de service a déterminé que ledit service d'appel en cours est le service de réseau intelligent qu'a reçu le terminal tiers.

2. Procédé selon la revendication 1, dans lequel la réalisation, par l'entité de commande de service, de l'authentification du terminal tiers en fonction des informations sur le terminal tiers, comprend en outre :
la détermination, par l'entité de commande de service, d'une entité de commande de service de rattachement du terminal tiers en fonction des informations sur le terminal tiers, et l'acceptation de l'authentification si les informations de données d'utilisateur du terminal tiers sauvegardées par l'entité de commande de service de rattachement du terminal tiers répondent à une condition définie.

3. Procédé selon la revendication 2, dans lequel les informations sur le terminal tiers comprennent une identification du terminal tiers et un mot de passe du terminal tiers, et dans lequel la condition définie est que le mot de passe du terminal tiers est le même qu'un mot de passe du terminal tiers sauvegardé par l'entité de commande de service de rattachement du terminal tiers.

4. Procédé selon la revendication 1, dans lequel l'obtention, par l'entité de commande de service, du service de réseau intelligent qu'a reçu le terminal tiers en fonction des informations sur le terminal tiers, comprend :
la détermination (402, 502), par l'entité de commande de service, d'une entité de commande de service de rattachement du terminal tiers en fonction des informations sur le terminal tiers, et la détermination, en fonction des informations sauvegardées par l'entité de commande de service de rattachement du terminal tiers sur le service de réseau intelligent qu'a reçu le terminal tiers, que le terminal tiers a reçu le service de réseau intelligent correspondant aux informations sur le service de réseau intelligent.

5. Système de mise en oeuvre d'un service de réseau intelligent, comprenant une entité de commutation de service, un terminal appelant et une entité de commande de service, dans lequel
le terminal appelant est configuré pour envoyer une requête d'appel à l'entité de commutation de service, la requête d'appel comprenant une identification d'accès à distance d'un service de réseau intelligent, des informations sur un terminal tiers et une identification d'un terminal appelé, l'identification d'accès à distance du service de réseau intelligent indiquant que le tarif de communication est pris en charge par le terminal tiers, et que l'appel en cours demande le service de réseau intelligent qu'a reçu le terminal tiers ; et
l'entité de commande de service est configurée pour réaliser l'authentification du terminal tiers en fonction des informations reçues sur le terminal tiers, obtenir des informations sur le service de réseau intelligent qu'a reçu le terminal tiers, déterminer que le service d'appel en cours est le service de réseau intelligent qu'a reçu le terminal tiers, et exécuter le service de réseau intelligent et connecter de l'appel au terminal appelé en fonction de l'identification de connexion du terminal appelé, si l'authentification réussit et si l'entité de commande de service a déterminé que ledit service d'appel en cours est le service de réseau intelligent qu'a reçu le terminal tiers.

6. Système selon la revendication 5, comprenant en outre une entité de commutation de service ou une entité de réception d'informations, dans lequel l'entité de commutation de service est configurée pour envoyer les informations sur le terminal tiers et l'identification du terminal appelé à l'entité de commande de service ; et
l'entité de réception d'informations est configurée pour envoyer les informations sur le terminal tiers et l'identification du terminal appelé à l'entité de commande de service.

7. Système selon la revendication 5, dans lequel
l'entité de commande de service est configurée pour déterminer une entité de commande de service de rattachement du terminal tiers en fonction des informations sur le terminal tiers, et accepter l'authentification si les informations de données d'utilisateur du terminal tiers sauvegardées par l'entité de commande de service de rattachement du terminal tiers répondent à une condition définie.

8. Système selon la revendication 5, dans lequel
l'entité de commande de service est configurée pour déterminer une entité de commande de service de rattachement du terminal tiers en fonction des informations sur le terminal tiers, et déterminer, en fonction des informations sauvegardées par l'entité de commande de service de rattachement du terminal tiers sur le service de réseau intelligent qu'a reçu le terminal tiers, que le terminal tiers a reçu le service de réseau intelligent correspondant aux informations sur le service de réseau intelligent.

9. Entité de commande de service comprenant une unité de réception, une unité d'authentification et une unité d'exécution, dans laquelle
l'unité de réception (11) est configurée pour recevoir une requête d'appel envoyée par un terminal appelant, la requête d'appel comprenant une identification d'accès à distance du service de réseau intelligent, des informations sur un terminal tiers et une identification de connexion d'un terminal appelé ; l'identification d'accès à distance du service de réseau intelligent indiquant que le tarif de communication est pris en charge par le terminal tiers et que l'appel en cours demande le service de réseau intelligent qu'a reçu le terminal tiers ;
l'unité d'authentification (12) est configurée pour réaliser une authentification du terminal tiers en fonction des informations sur le terminal tiers, et déclencher l'unité d'exécution si l'authentification réussit ; et
l'unité d'exécution (13) est configurée pour mettre en oeuvre un service de réseau intelligent en fonction de l'identification du terminal appelé s'il est déterminé qu'un service d'appel en cours est le service de réseau intelligent qu'a reçu le terminal tiers ; dans laquelle l'unité d'exécution comprend :
une unité de consultation (31) configurée pour déterminer une entité de commande de service de rattachement du terminal tiers en fonction des informations sur le terminal tiers ;
une unité d'obtention (32) configurée pour déterminer, en fonction des informations sauvegardées par l'entité de commande de service de rattachement du terminal tiers sur le service de réseau intelligent qu'a reçu le terminal tiers, que le terminal tiers a reçu le service de réseau intelligent correspondant aux informations sur le service de réseau intelligent ; et
une unité de mise en oeuvre (33) configurée pour mettre en oeuvre le service de réseau intelligent en fonction de l'identification du terminal appelé si l'authentification réussit et s'il est déterminé que le service d'appel en cours est le service de réseau intelligent qu'a reçu le terminal tiers.

10. Entité de commande de service selon la revendication 9, dans laquelle l'unité d'authentification comprend une unité de détermination et une unité d'envoi, et dans laquelle
l'unité de détermination est configurée pour déterminer une entité de commande de service de rattachement du terminal tiers en fonction des informations sur le terminal tiers, et envoyer les informations d'authentification réussie à l'unité d'envoi si les informations de données d'utilisateur du terminal tiers sauvegardées par l'entité de commande de service de rattachement du terminal tiers répondent à une condition définie ; et
l'unité d'envoi est configurée pour déclencher l'unité d'exécution à la réception des informations d'authentification réussie.
